Europäisches Patentamt

**European Patent Office**

Office européen des brevets

(11) Publication number: **0 034 024**
A1

# (12) EUROPEAN PATENT APPLICATION

(21) Application number: **81300405.8**

(51) Int. Cl.³: **B 42 D 15/02**, G 10 H 1/26

(22) Date of filing: **30.01.81**

(30) Priority: **01.02.80 US 117799**

(43) Date of publication of application: **19.08.81**
Bulletin 81/33

(84) Designated Contracting States: **AT BE CH DE FR GB IT LI LU NL SE**

(71) Applicant: **Swarztrauber, Sayre, 301 East 79th Street, New York, NY 10021 (US)**
Applicant: **Segan, Marc Howard, 154 West 70th Street, New York, NY 10023 (US)**

(72) Inventor: **Swarztrauber, Sayre, 301 East 79th Street, New York, NY 10021 (US)**
Inventor: **Segan, Marc Howard, 154 West 70th Street, New York, NY 10023 (US)**

(74) Representative: **McCallum, William Potter et al, Cruikshank & Fairweather 19 Royal Exchange Square, Glasgow G1 3AE Scotland (GB)**

(54) **Audio-visual message device.**

(57) An audio-visual message device that utilizes microelectronic digital memory and digital logic to produce through an acoustic transducer (180), the audio portion of the message. In one embodiment the microelectronic digital circuitry is affixed to the back leaf of a greeting card (15) and a photosensitive switch (50) turns on the audio message when the card is opened. A variety of messages may be stored in the digital memory and only selected messages chosen for the appropriate greeting at the time of manufacture.

0034024

## AUDIO-VISUAL MESSAGE DEVICE

The present invention relates to an audio-visual message device having digital microelectronic means for producing music or other audible messages. Specifically, the device is in the form of a conventional greeting card having the usual picture and word message in combination with digital microelectronic means for producing sound.

Previous efforts to combine sound production with greeting cards and the like have been based on purely mechanical techniques for sound reproduction. Typically such efforts have used adaptations of the phonograph for the playing back of previously recorded sound. These devices were generally manually operated and provided uneven sound reproduction at best. The use of such analog recording and reproduction techniques requires some form of relative motion between the record medium whether it be wax impression, magnetic tape or magnetic wire and the playback device, therefore such devices are necessarily either complex and expensive or lacking in sound quality. Thus, even the recent revolutionary advances in the miniaturization of such devices has not led to their practical use in combination with inexpensive expendable articles such as greeting cards. Similarly purely electronic analog devices such as synthesizers and the like have not been adapted to such uses, primarily because these devices are not as amenable to microminiaturization due to the inherent physical properties required of the components of such analog systems. In contrast, the present invention utilizes the purely digital techniques of sound production disclosed

- 2 -

0034024

in applicants' co-pending United States Application Serial No. 000,268 for Music Tone Generator which is in the highly microminiaturized form of integrated circuits.

U.S. Patent No. 2,164,663 issued July 4, 1939 to T.H. Ottofy discloses an early attempt to combine a visual message carrier with sound reproduction. In this patent a flexible sound strip of Celluloid or other suitable material is embossed with ribs corresponding to the sounds to be reproduced. The strip is drawn through a hole or under a fastener such that vibrations are transmitted to the card, poster or the like and sounds are emitted.

U.S. Patent No. 2,976,049 issued March 21, 1961 to J.J. Ronci is an example of an adaptation of phonographic devices to solve the problem of combining an audio output with a conventional visual message medium such as a greeting card. This device employs a prerecorded conventional phonographic disc attached to the card for manual rotation. A needle bearing arm is attached so as to cause the needle to engage the grooves in the disc and press the disc against the card. When the disc is manually rotated it causes the card to vibrate in accordance with the prerecorded variation in the groove and sound is produced.

U.S. Patent No. 3,822,064 issued July 2, 1974 to Max Meier-Maletz is another example of the adaptation of phonographic devices to the problem solved by the invention disclosed herein. Once again, this device employs a conventional phonographic disc attached to the card for manual rotation. In contrast to the Ronci device the Meier-Maletz device has a simplified needle bearing portion that is foldably formed into an improved sound producing surface. When the disc is manually rotated the prerecorded variations in the disc grooves are transmitted through the needle bearing surface causing the sound producing surface to vibrate and reproduce the recorded sounds. This patent is of particular interest because it demonstrates that those skilled in the art were still pursuing mechanical methods in attempting to make an inexpensive audio-visual message device at a time when sophisticated microelectronics were available.

U.S. Patent 3,515,792 issued June 2, 1970 to Ralph Deutsch discloses an electronic sound producing device that combines both analog synthesizer and digital processing tehchniques. In this apparatus digital representations of selected wave shapes are stored in a memory. A frequency synthesizer is utilized to produce a signal for reading out of memory a particular waveshape which is then digitally processed. The resultant digital waveform is converted to a conventional analog waveform for audio output. Significantly, there is no suggestion that sound producing devices of this type could be combined with an inexpensive visual message bearing device to achieve the result of an audio-visual message bearing device such as a musical greeting card.

An object of the present invention is to provide an inexpensive, expendable audio-visual message bearing device that employs micro-miniature digital electronics to produce the audio portion of the message.

According to the present invention there is provided a portable audio-visual message device comprising:

a) digital storage means for storing values of pitch and duration for selected sounds;

b) digital logic means for accessing said digital sotrage means and for producing from said stored values a series of rectangular waves;

c) output means including acoustic transducer means, connected to said digital logic means, for producing audible sounds from said series of rectangular waves;

d) means for supplying electrical energy;

e) switch means for connecting said electrical energy to said digital logic means and said output means, whereby a predetermined manipulation of said device actuates said switch means and.audible sound is produced.

According to a. further aspect of the present invention there is provided a musical greeting card comprising:

a) digital storage means for storing values of pitch and duration for a plurality of musical tones;

b) digital logic means for accessing said digital storage means and producing from the said stored values a series of rectangular waves, each wave of said series having a predetermined energy content;

c) output means, including acoustic transducer means, connected to said digital logic means for producing musical tones from said series of rectangular waves;

d) means for supplying electrical energy;

·e) switch means for connecting said electrical energy to said digital logic means and said output means whereby a predetermined manipulation of the greeting card actuates said switch means and a series of musical tones is produced.

The invention utilizes the digital sound producing techniques disclosed in applicants' co-pending Application Serial No. 000,268 for Music Tone Generator. That invention is a unique purely digital method of producing sounds by controlling the energy content of the waves in a series of rectangular waves produced by a programmed rectangular wave generator. A wide range of tones can be produced using this method and the tones may be arranged in the form of messages, for example musical Christmas or birthday greetings, which are stored in digital form in a memory such as semiconductor Read Only Memory (ROM).

Specifically, the bell tone generator of Application Serial No. 000,268 has been implemented in the form of a single integrated circuit having a Read Only Memory containing note pitch and duration values arranged in accordance with several different musical compositions and digital logic circuitry for producing from those values a series of controlled energy content rectangular waves. The series of rectangular waves are output through a miniature acoustic transducer to produce music. The integrated circuits, a switch, acoustic transducer and a supply of electrical energy are incorporated into a visual message bearing device such as a greeting card. When the device is manipulated in a predetermined manner, e.g. the greeting card is opened, the musical compositions are played. The result is a portable audio-visual message bearing device which is relatively inexpensive, expendable and extremely versatile.

The advantages, nature and various features of the invention will appear more fully upon consideration of the various illustrative embodiments now to be described in detail in the accompanying drawings. In the drawings:

FIG. 1 is a front view of a 5" x 7" Christmas greeting card which is an example of an audio-visual message bearing device of the invention.

FIG. 2 is a view of the card of FIG. 1 in the open position in which the visual message is displayed and the audio message is playing.

FIG. 3 is a section of FIG. 1 along line 3-3.

FIG. 4 is a block diagram of the integrated circuit bell tone generator used in the device of the invention.

FIG. 5 is a cut away view of the back of the greeting card of FIG. 1 showing the arrangement of the components of the audio portion of the device of the invention.

FIG. 6 is a schematic of the circuit used in the device of FIG. 1.

FIG. 7 shows an alternative embodiment of the audio generating circuit of the device of the invention.

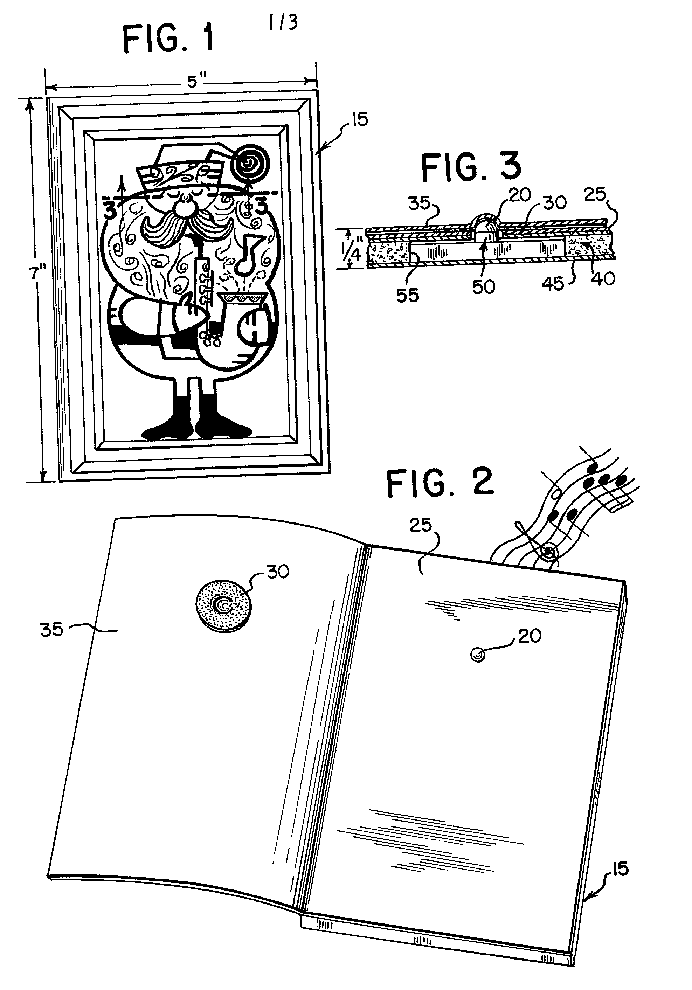

Referring to FIG. 1 there is shown a front view of a nominally 5" x 7" standard Christmas greeting card 15 which is an example of an audio-visual message device of the invention. In this instance the audio portion of the message is a number of Christmas carols played in bell tones. Since, as is explained in more detail herein below, the audio portion of the message is fixed at the time of manufacture of the integrated circuit, a Christmas greeting card was chosen as illustrative of the audio-visual devices of the invention. Naturally, other music or messages which can be stored in the memory portion of the integrated circuit would suggest other visual media such as other greeting cards, posters or books.

FIG. 2 illustrates the card of FIG. 1 in the open and operative position. Upon opening the card ambient light impinges on the lens 20 of a phototransistor switch which is exposed through an opening in the back leaf 25 of the card. The light turns on the audio circuit of the device and the audio portion of the message commences; in this instance Christmas carols played in bell tones. Opaque portion 30 affixed to the front leaf 35 covers lens 20 when the card is closed and insures that the photosensitive switch remains in the off state.

FIG. 3 is a cross-section of the card of FIG. 1 taken along line 3-3 with the dimensions expanded from the actual thickness to illustrate the relation of the parts. The card is shown in its closed position with front leaf 35 folded onto back leaf 25. The lens 20 of phototransistor 50 is shown under a greatly exaggerated dimple in front leaf 35. Affixed to back leaf 25 is a sheet 40 of styrofoam or the like having a cut away portion 55 to accommodate the electronics of the device. The overall thickness of the entire assembly is less than 1/4". This thickness is limited at the present time by the thickness of the batteries employed to power the electronics which in this embodiment are on the order of 3/32" hence the thickness of the entire assembly can easily be reduced.

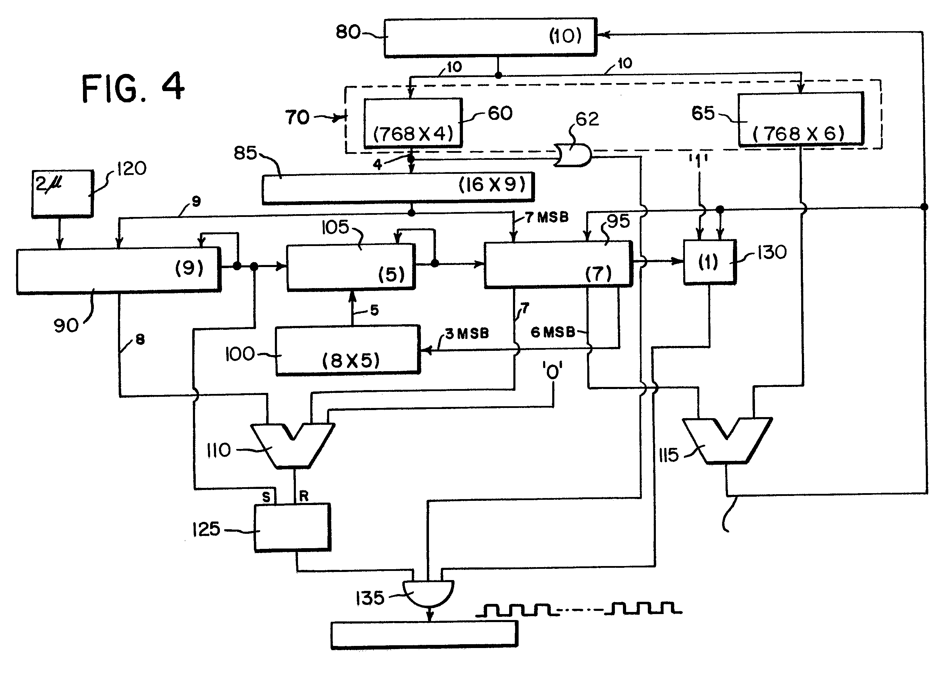

FIG. 4 is a functional block diagram of the digital electronic integrated circuit music tone generator which produces the waveforms of the audio portion of the message of the device of the invention. It is understood that the actual integrated circuit comprises hundreds of digital logic elements fabricated on a single silicon chip using available integrated circuit technology. The integrated circuit chip of the illustrative embodiment was manufactured using such technology by LSI Computer Systems, Inc. of Melville, New York. This circuit uses the principles set forth in co-pending application Serial No. 000,268 and is in fact an integrated circuit embodiment of the programmed micro-processor of that invention.

Referring to FIG. 4 there is shown a NOTE ROM 60 which is 768 by 4 bits and an End of Note ROM 65 which is 768 by 6 bits. In the actual construction of the integrated circuit they constitute a single 768 by 10 bit digital storage ROM as is indicated by the dashed line 70. In other words a single 768 by 10 bit word digital memory is fabricated on the chip; the four least significant bits R00-R03 of each word identify the note to be sounded and the most significant bits R04-R09 of each word determine the duration of that note. The 768 words are arranged in the ROM so that when they are addressed by 10 bit Note Counter (CTR) 80 each note of a musical composition is played in succession. In this embodiment the notes of eleven different Christmas carols are so arranged. Table I lists the contents of the Note and End of Note ROM in coded form. The actual bit pattern of each word in the ROM can be decoded using Table II to decode the six most significant bits and Table III to decode the four least significant bits. The 3 digit column headings are the address of the first entry in the column which is also in the code shown in Table III. This address corresponds to the value in the Note Counter 80 which contains the ten least significant bits of this twelve bit address code. Thus, as is more fully explained below each word is accessed sequentially by incrementing the Note Counter 80.

## T A B L E   I

### CODED NOTE-DURATION TABLE (768x10)

| 000 | | 020 | | 040 | | 060 | |
|-----|-----|-----|-----|-----|-----|-----|-----|
| NOTE | DUR | NOTE | DUR | NOTE | DUR | NOTE | DUR |
| E | 33 | E | 2F | D | 00 | 6 | 38 |
| A | 37 | 7 | 37 | D | 31 | 7 | 37 |
| A | 31 | 9 | 35 | D | 31 | 7 | 37 |
| 9 | 32 | A | 33 | 6 | 38 | 7 | 31 |
| A | 21 | E | 3E | 7 | 37 | 7 | 31 |
| B | 30 | E | 28 | 9 | 35 | 7 | 37 |
| D | 34 | E | 28 | 4 | 3B | 9 | 35 |
| D | 34 | E | 2F | 4 | 3B | 9 | 35 |
| D | 34 | 7 | 37 | 4 | 3B | 7 | 37 |
| 9 | 3A | 9 | 35 | 4 | 3B | 9 | 00 |
| 9 | 32 | A | 33 | 2 | 3E | 4 | 09 |
| 7 | 34 | D | 08 | 4 | 3B | 7 | 37 |
| 9 | 32 | D | 31 | 6 | 38 | 7 | 37 |
| A | 31 | 6 | 38 | 9 | 35 | 7 | 03 |
| B | 36 | 7 | 37 | A | 3C | 7 | 37 |
| E | 33 | 9 | 35 | 4 | 09 | 7 | 37 |
| E | 33 | B | 0D | 7 | 37 | 7 | 03 |
| 7 | 3C | 4 | 3B | 7 | 37 | 7 | 37 |
| 7 | 34 | 4 | 3B | 7 | 03 | 4 | 3B |
| 6 | 35 | 6 | 38 | 7 | 37 | A | 38 |
| 7 | 34 | 9 | 35 | 7 | 37 | 9 | 30 |
| 9 | 32 | 7 | 03 | 7 | 03 | 7 | 03 |
| A | 37 | 0 | 09 | 7 | 37 | 0 | 09 |
| D | 34 | E | 2F | 4 | 3B | 6 | 38 |
| E | 2C | 7 | 37 | A | 38 | 6 | 38 |
| E | 2C | 9 | 35 | 9 | 30 | 6 | 3E |
| D | 34 | A | 33 | 7 | 03 | 6 | 32 |
| 9 | 34 | E | 05 | 0 | 09 | 6 | 38 |
| B | 36 | E | 2F | 6 | 38 | 7 | 37 |
| A | 05 | 7 | 37 | 6 | 38 | 7 | 37 |
| 0 | 31 | 9 | 35 | 6 | 3E | 7 | 31 |
| 0 | 31 | A | 33 | 6 | 32 | 7 | 31 |

## T A B L E  I  (con't)

### CODED NOTE-DURATION TABLE (768x10)

| 030 | | 0A0 | | 0C0 | | 0E0 | |
| --- | --- | --- | --- | --- | --- | --- | --- |
| NOTE | DUR | NOTE | DUR | NOTE | DUR | NOTE | DUR |
| 4 | 3B | 9 | 3E | C | 3B | 6 | 36 |
| 4 | 3B | A | 04 | E | 3A | 6 | 3B |
| 6 | 3B | 9 | 35 | F | 07 | 8 | 2F |
| 9 | 3A | A | 3B | 0 | 31 | 9 | 33 |
| A | 0F | D | 06 | 0 | 31 | 9 | 33 |
| 0 | 31 | 0 | 09 | 1 | 0A | 9 | 33 |
| 0 | 31 | 9 | 08 | 2 | 02 | 9 | 33 |
| A | 04 | 0 | 04 | 4 | 33 | 9 | 33 |
| 9 | 35 | 9 | 3E | 6 | 0A | 9 | 2E |
| A | 3B | 6 | 0F | 8 | 34 | 8 | 2F |
| D | 06 | 7 | 36 | 9 | 3C | 6 | 0A |
| 0 | 09 | 9 | 3E | A | 39 | 8 | 2F |
| A | 04 | A | 04 | C | 3E | 9 | 2E |
| 9 | 35 | 9 | 35 | 6 | 36 | A | 31 |
| A | 3B | A | 3B | 4 | 0F | A | 31 |
| D | 06 | D | 06 | 4 | 38 | A | 31 |
| 0 | 09 | 0 | 09 | 2 | 2B | A | 2B |
| 4 | 07 | 4 | 07 | 2 | 3B | 9 | 2E |
| 0 | 09 | 0 | 09 | 1 | 1B | 8 | 06 |
| 4 | 07 | 4 | 07 | 0 | 1D | 9 | 2E |
| 7 | 0D | 1 | 0E | 1 | 3C | A | 2B |
| 0 | 0D | 0 | 04 | 1 | 3C | C | 30 |
| 6 | 03 | 4 | 3A | 2 | 3B | 1 | 0A |
| 0 | 09 | 7 | 02 | 4 | 38 | 4 | 38 |
| 6 | 03 | 6 | 0F | 6 | 36 | 6 | 3B |
| A | 0D | 0 | 0D | 6 | 3B | 8 | 2F |
| 0 | 09 | 2 | 0C | 8 | 2F | 9 | 33 |
| 9 | 08 | 0 | 20 | 9 | 33 | 8 | 34 |
| 0 | 04 | 6 | 05 | 1 | 3C | 9 | 3C |
| 9 | 3E | A | 3D | 1 | 3C | A | 39 |
| 6 | 0F | D | 3A | 2 | 3B | C | 0A |
| 7 | 36 | A | 3E | 4 | 38 | 0 | 31 |

0034024

T A B L E  I   (cont'd)

CODED NOTE-DURATION TABLE (768x10)

| 100 | | 120 | | 140 | | 160 | |
|---|---|---|---|---|---|---|---|
| NOTE | DUR | NOTE | DUR | NOTE | DUR | NOTE | DUR |
| 0 | 31 | 0 | 08 | 6 | 06 | C | 30 |
| A | 3B | 7 | 01 | 7 | 04 | A | 2C |
| A | 0C | 0 | 08 | 0 | 0A | 9 | 2F |
| E | 35 | 9 | 3E | 9 | 1B | 8 | 30 |
| A | 3B | 7 | 01 | A | 36 | A | 2C |
| 9 | 1B | A | 3B | A | 03 | 9 | 38 |
| E | 02 | 9 | 3E | 0 | 31 | A | 2C |
| 7 | 01 | B | 01 | 0 | 31 | C | 30 |
| 9 | 3E | D | 30 | 6 | 3C | D | 30 |
| 7 | 01 | E | 35 | 8 | 30 | C | 38 |
| 6 | 02 | A | 3B | 9 | 34 | A | 36 |
| 7 | 0B | A | 3B | A | 32 | 9 | 2F |
| 0 | 04 | B | 39 | C | 30 | 8 | 35 |
| 9 | 3E | A | 3B | A | 32 | A | 32 |
| A | 3B | 9 | 3E | 9 | 34 | 9 | 38 |
| A | 0C | A | 0C | C | 30 | 8 | 30 |
| B | 39 | E | 35 | A | 2C | 6 | 36 |
| D | 37 | 7 | 01 | 9 | 2F | A | 32 |
| B | 39 | 7 | 01 | 8 | 30 | 9 | 2F |
| A | 3B | 9 | 3E | A | 2C | 7 | 30 |
| 9 | 3E | 7 | 01 | 9 | 38 | 6 | 36 |
| 7 | 01 | 6 | 02 | A | 2C | 4 | 33 |
| B | 09 | 7 | 01 | C | 30 | 2 | 35 |
| D | 3E | 0 | 08 | D | 30 | 1 | 3D |
| E | 2E | 9 | 3E | C | 38 | 2 | 3C |
| E | 02 | 7 | 01 | 6 | 3C | 4 | 39 |
| 0 | 1C | 6 | 02 | 8 | 30 | 6 | 01 |
| 4 | 06 | 7 | 01 | 9 | 34 | 6 | 3C |
| 0 | 08 | 9 | 3E | A | 32 | 8 | 30 |
| 6 | 02 | A | 3B | C | 30 | 9 | 34 |
| 7 | 01 | B | 0C | A | 32 | A | 32 |
| 6 | 02 | A | 3C | 9 | 34 | C | 30 |

T A B L E   I   (cont'd)

CODED NOTE-DURATION TABLE (768x10)

| 180 | | 1A0 | | 1C0 | | 1E0 | |
|---|---|---|---|---|---|---|---|
| NOTE | DUR | NOTE | DUR | NOTE | DUR | NOTE | DUR |
| A | 32 | A | 3E | A | 2E | 7 | 3A |
| 9 | 34 | 9 | 01 | A | 3E | 7 | 3A |
| C | 32 | 7 | 3F | 9 | 01 | 9 | 37 |
| 4 | 34 | 7 | 32 | 7 | 3F | A | 35 |
| 4 | 34 | 7 | 22 | 7 | 32 | B | 34 |
| 4. | 34 | 7. | 38 | 7 | 22 | D | 32 |
| 4 | 34 | 9 | 36 | 7 | 38 | E | 31 |
| 6 | 05 | 7 | 38 | 9 | 36 | D | 32 |
| 8 | 33 | 6 | 07 | 7 | 38 | B | 34 |
| 9 | 3E | B | 3D | 6 | 09 | A | 35 |
| A | 3D | 9 | 01 | B | 00 | 9 | 37 |
| C | 07 | A | 3E | 9 | 06 | 7 | 08 |
| 0 | 31 | 4 | 0B | A | 02 | 0 | 05 |
| 0 | 31 | 4 | 3C | 0 | 31 | 7 | 3A |
| E | 38 | 7 | 38 | 0 | 31 | 6 | 3B |
| A | 39 | 2 | 1A | D | 32 | 9 | 37 |
| A | 2E | 0 | 05 | D | 32 | 7 | 3A |
| A | 3E | 4 | 3C | 7 | 3A | 6 | 3B |
| 9 | 01 | 4 | 3C | 7 | 3A | 4 | 3E |
| 7 | 3F | 6 | 39 | 9 | 37 | 2 | 01 |
| 7 | 32 | 6 | 07 | A | 35 | 7 | 3A |
| 7 | 22 | 6 | 07 | B | 34 | 9 | 37 |
| 7 | 38 | 6 | 39 | D | 32 | A | 35 |
| 9 | 36 | 9 | 36 | E | 31 | D | 32 |
| 7 | 38 | 4 | 0B | D | 32 | B | 34 |
| 6 | 07 | 0 | 05 | B | 34 | A | 35 |
| B | 3D | 6 | 39 | A | 35 | 9 | 04 |
| 9 | 01 | 6 | 39 | 9 | 37 | A | 35 |
| A | 3E | 7 | 38 | 7 | 08 | 9 | 37 |
| E | 38 | 7 | 05 | 0 | 05 | 7 | 08 |
| A | 39 | E | 38 | D | 32 | 6 | 3B |
| A | 2E | A | 39 | D | 32 | 7 | 3A |

T A B L E  I   (cont'd)

CODED NOTE-DURATION TABLE (768x10)

| 200 | | 220 | | 240 | | 260 | |
|---|---|---|---|---|---|---|---|
| NOTE | DUR | NOTE | DUR | NOTE | DUR | NOTE | DUR |
| 7 | 3A | 0 | 0D | 7 | 3C | 0 | 31 |
| 9 | 37 | 0 | 07 | 6 | 35 | E | 33 |
| A | 35 | E | 33 | 7 | 34 | A | 38 |
| B | 34 | E | 33 | 9 | 3A | A | 3F |
| D | 3C | D | 34 | A | 05 | B | 30 |
| A | 2F | B | 36 | 7 | 34 | A | 38 |
| B | 2E | B | 36 | 9 | 32 | 7 | 3D |
| D | 32 | B | 36 | A | 37 | 7 | 3D |
| 9 | 04 | B | 36 | B | 03 | 9 | 3B |
| A | 35 | A | 31 | 9 | 32 | 4 | 02 |
| 9 | 37 | B | 30 | A | 31 | 4 | 02 |
| 7 | 3A | A | 37 | B | 36 | 4 | 0D |
| 6 | 3B | B | 03 | D | 00 | 6 | 35 |
| 4 | 3E | 0 | 0D | 0 | 0D | 7 | 3D |
| 2 | 01 | 0 | 07 | 0 | 33 | 9 | 3B |
| 7 | 3A | D | 34 | E | 07 | 7 | 0F |
| 9 | 38 | B | 36 | D | 34 | E | 33 |
| A | 36 | A | 37 | B | 36 | A | 38 |
| B | 35 | 9 | 3A | B | 36 | A | 3F |
| D | 3E | 9 | 3A | B | 36 | B | 30 |
| 0 | 31 | 9 | 3A | A | 31 | A | 39 |
| 0 | 31 | 7 | 3C | B | 30 | 7 | 3D |
| E | 07 | 9 | 32 | A | 37 | 7 | 3D |
| D | 34 | A | 31 | B | 03 | 9 | 3B |
| B | 36 | B | 36 | 0 | 0D | 4 | 02 |
| B | 36 | D | 0B | 0 | 0D | 9 | 3B |
| B | 36 | D | 34 | D | 2E | 9 | 03 |
| B | 36 | B | 36 | E | 2C | B | 30 |
| A | 31 | A | 37 | D | 34 | B | 37 |
| B | 30 | 9 | 3A | E | 07 | D | 35 |
| A | 37 | 9 | 3A | 0 | 31 | E | 3E |
| B | 03 | 9 | 3A | | | 4 | 02 |

## T A B L E I (cont'd)

### CODED NOTE-DURATION TABLE (768x10)

| 280 | | 2A0 | | 2C0 | | 2E0 | |
|---|---|---|---|---|---|---|---|
| NOTE | DUR | NOTE | DUR | NOTE | DUR | NOTE | DUR |
| 4 | 02 | 2 | 06 | 4 | 01 | 7 | 3C |
| 4 | 02 | 4 | 02 | 4 | 0B | 6 | 3E |
| A | 38 | 6 | 3F | 6 | 35 | 7 | 0D |
| 6 | 3F | 7 | 3D | 7 | 0D | 9 | 09 |
| 7 | 3D | 6 | 22 | 7 | 3C | 4 | 01 |
| 7 | 3D | 9 | 3B | 9 | 3A | 0 | 06 |
| 9 | 3B | 7 | 34 | 7 | 3C | 2 | 3A |
| 4 | 02 | 6 | 35 | 4 | 01 | 4 | 37 |
| 4 | 02 | 4 | 1E | 7 | 05 | 6 | 35 |
| 4 | 02 | A | 32 | 9 | 32 | 7 | 34 |
| A | 38 | A | 3D | A | 05 | 6 | 10 |
| 6 | 3F | 9 | 00 | 4 | 01 | 4 | 37 |
| 7 | 3D | A | 12 | 0 | 06 | 6 | 35 |
| 7 | 3D | 0 | 31 | 2 | 3A | 7 | 34 |
| 9 | 3B | 0 | 31 | 4 | 37 | 9 | 32 |
| 2 | 06 | 7 | 3C | 6 | 35 | 7 | 0D |
| 2 | 06 | 7 | 3C | 7 | 34 | 6 | 35 |
| 2 | 06 | 7 | 3C | 6 | 10 | 7 | 34 |
| 4 | 02 | 4 | 01 | 4 | 37 | 9 | 32 |
| 6 | 3F | 4 | 0B | 6 | 35 | A | 30 |
| 7 | 3D | 6 | 35 | 7 | 34 | 9 | 01 |
| 6 | 22 | 7 | 0D | 9 | 32 | E | 2B |
| 9 | 3B | 7 | 3C | 7 | 0D | E | 3D |
| 7 | 34 | 9 | 3A | 6 | 35 | A | 37 |
| 6 | 35 | 7 | 3C | 7 | 34 | 9 | 3A |
| 4 | 0D | 4 | 01 | 9 | 32 | 7 | 3E |
| A | 31 | 7 | 05 | A | 30 | 6 | 3E |
| A | 38 | 9 | 32 | 9 | 01 | 7 | 21 |
| 9 | 3B | A | 05 | E | 2B | 9 | 19 |
| 7 | 0F | 7 | 3C | E | 3D | A | 05 |
| 2 | 24 | 7 | 3C | A | 37 | 0 | 31 |
| 2 | 3A | 7 | 3C | 9 | 3A | 0 | 31 |

## T A B L E  I I

### 6 Bit Conversion Chart

| 00 | 111111 | | 20 | 011111 |
|----|--------|-|----|--------|
| 01 | 111110 | | 21 | 011110 |
| 02 | 111101 | | 22 | 011101 |
| 03 | 111100 | | 23 | 011100 |
| 04 | 111011 | | 24 | 011011 |
| 05 | 111010 | | 25 | 011010 |
| 06 | 111001 | | 26 | 011001 |
| 07 | 111000 | | 27 | 011000 |
| 08 | 110111 | | 28 | 010111 |
| 09 | 110110 | | 29 | 010110 |
| 0A | 110101 | | 2A | 010101 |
| 0B | 110100 | | 2B | 010100 |
| 0C | 110011 | | 2C | 010011 |
| 0D | 110010 | | 2D | 010010 |
| 0E | 110001 | | 2E | 010001 |
| 0F | 110000 | | 2F | 010000 |
| 10 | 101111 | | 30 | 001111 |
| 11 | 101110 | | 31 | 001110 |
| 12 | 101101 | | 32 | 001101 |
| 13 | 101100 | | 33 | 001100 |
| 14 | 101011 | | 34 | 001011 |
| 15 | 101010 | | 35 | 001010 |
| 16 | 101001 | | 36 | 001001 |
| 17 | 101000 | | 37 | 001000 |
| 18 | 100111 | | 38 | 000111 |
| 19 | 100110 | | 39 | 000110 |
| 1A | 100101 | | 3A | 000101 |
| 1B | 100100 | | 3B | 000100 |
| 1C | 100011 | | 3C | 000011 |
| 1D | 100010 | | 3D | 000010 |
| 1E | 100001 | | 3E | 000001 |
| 1F | 100000 | | 3F | 000000 |

0034024

T A B L E  <u>I I I</u>

A Bit Conversion Chart

| CODE | DATA |
|------|------|
| 0 | 0000 |
| 1 | 0001 |
| 2 | 0010 |
| 3 | 0011 |
| 4 | 0100 |
| 5 | 0101 |
| 6 | 0110 |
| 7 | 0111 |
| 8 | 1000 |
| 9 | 1001 |
| A | 1010 |
| B | 1011 |
| C | 1100 |
| D | 1101 |
| E | 1110 |
| F | 1111 |

The NOTE information contained in the four least significant bits of each word in the Note and End of Note ROM is used as a four bit address for accessing the period values stored in the Period Table ROM 85. There are sixteen 9 bit values stored in the ROM which define the period or frequency of each of the 15 notes and one rest used in the musical compositions to be played. The rest is provided when the four address bits are zero by OR gate 62 which disables AND gate 135. Table IV contains the sixteen 9 bit values stored in the Period Table ROM 85.

T A B L E  IV

Period Table
ROM

| NOTE | Address | Period |
|---|---|---|
| 0 | 0000 | 111111110 |
| 1 | 0001 | 010001111 |
| 2 | 0010 | 010010111 |
| 3 | 0011 | 010100000 |
| 4 | 0100 | 010101010 |
| 5 | 0101 | 010110100 |
| 6 | 0110 | 010111111 |
| 7 | 0111 | 011001010 |
| 8 | 1000 | 011010111 |
| 9 | 1001 | 011100011 |
| A | 1010 | 011111111 |
| B | 1011 | 100001111 |
| C | 1100 | 100011111 |
| D | 1101 | 100110000 |
| E | 1110 | 101010101 |
| F | 1111 | 101111111 |

The 9 bit period values from the Period Table ROM are loaded into the Period Counter 90 which is a nine stage modulo n down-counter that is part of the digital logic used to fix the period of the series of rectangular waves generated to sound the particular note to which that period corresponds, as will be more fully explained herein below.

The 7 Most Significant Bits (MSB) of the 9 bit period values are loaded into the Duty Cycle Counter 95 which is a seven stage modulo in down-counter that along with Feedback ROM 100, Cycle Counter 105 and Duty Cycle Comparator 110 forms a part of the digital logic that determines the duty cycle or energy content of the rectangular waves in the series generated to sound the particular note. The 6 MSB's of the Duty Cycle Counter 95 are also used in conjunction with End of Note Comparator 115 to determine when the note has come to an end and the next note is to be selected and played.

As can be seen the Period Counter is driven by a 2 microsecond clock 120. There is of course a source of voltage and current (not shown) to power this clock as well as the other functions depicted in FIG. 4 as will be understood by those skilled in the art.

Finally, the actual series of rectangular waves is formed by the setting and resetting of Output Flip-Flop (F/F) 125. The output of which is Anded with the output of Blanking Counter 130 and OR gate 62 by And gate 135 and fed to the audio output circuit.

The operation of the digital logic shown in FIG. 4 will be illustrated by Explaining the generation of the rectangular wave series for the first note stored in the Note and End of Note ROM 70. Upon application of power to the integrated circuit Note Counter 80 is set to its initial value of all zeros. Refeering to Table I it is seen that the address 000 contains the value E for the Note and the value 33 for the Duration or End of Note. By reference to Tables II and III it can be seen that this represents the ten bit number 0011001110. As was stated above the four least significant bits R00-R03 (1110) are used as an address to the Period Table ROM 85. Referring to Table IV it is seen that the 9 bit number 101010101 is stored at this address. Thus, this number is loaded into the nine stages of the Period Counter 90 as is indicated by the 9 on the line from the Period Table ROM 85. Simultaneously the 7 MSB's of this number 1010101 are loaded into the seven stages of the Duty Cycle Counter 95 as is indicated by the 7 on the line from the Period Table ROM 85. The 3 MSB's of this number (101) are in turn used as an address for the Feedback ROM 100 as is indicated by the 3 on the line from the Duty Cycle Counter 95. Referring to Table V it is seen that the five bit number 00001 is stored at this address and it is loaded into the five stages of the Cycle Counter 105 as is indicated by the 5 on the line from the Feedback ROM 100.

T A B L E  V̄

Feedback ROM (8 x 5)

| Address | Data |
|---------|-------|
| 000 | 11111 |
| 001 | 11111 |
| 010 | 01111 |
| 011 | 00111 |
| 100 | 00011 |
| 101 | 00001 |
| 110 | 11111 |
| 111 | 11111 |

As is indicated by the 8 on the line from Period Counter 90 the 8 MSB's of that counter are compared to the 7 bits in the Duty Cycle Counter 95, shifted by a constant '0' bit, in the Duty Cycle Comparator 110. This shift is accomplished by placing an '0' in the most significant bit which in effect divides the number represented by the 8 MSB's in half providing a 50% duty cycle. In operation the Output Flip/Flop 125 is set upon loading of the Period Counter 90 and is reset by an output from the Duty Cycle comparator 110. The Period Counter 90 continues to count down to the end of the period and upon underflow is reloaded with the value in the Period Table 85. Simultaneously, the Output Flip/Flop 125 is set and the Cycle Counter 105 is decremented. This process continues until a number of rectangular waves equal to the number stored in the Cycle Counter have been generated. It is noted that each of these waves has the same duty cycle or energy content. When the Cycle Counter 105 underflows it is reloaded with the value in the Feedback ROM 100. Simultaneously, the Duty Cycle Counter 95 is decremented and a new duty cycle or energy content is determined for the rectangular wave. This process continues until there is an output from the End of Note Comparator 115 which is comparing the 6 MSB's of the Duty Cycle Counter 95 with the 6 bits stored in the End/of Note ROM 65. This output causes incrementing of the Note Counter 80 as well as forces the loading of all of the other counters so that the above described process can be commenced for the next Note. It will be recognized by those skilled in the art that there is "pipelining" involved in the timing of these events. In the event the Duty Cycle Counter 95 reaches zero without having caused an End of Note output from comparator 115, the next input to the Duty Cycle Counter from the Cycle Counter will cause it to underflow, which in turn causes the Blanking Counter 130 to go to zero and disable the AND gate 135. This in turn prevents any further output of rectangular waves to the audio output circuit. In this instance the Duty Cycle Counter will begin counting down from its maximum value until an output is generated from the Comparator 115 and a new note is selected as is described herein above.

The foregoing is a detailed description of the specific embodiment of the audio generating digital memory and digital logic used in the audio-visual message bearing device of the invention. It is recognized that other arrangements of digital memory and logic can be employed to achieve the objects of the invention, for example the programmed microprocessor of co-pending application Serial No. 000,268 could be used. In addition, it is well within the skill of the art to alter the memory and energy content controlling logic of this embodiment to obtain different musical messages and to procude sounds other than bell tones.

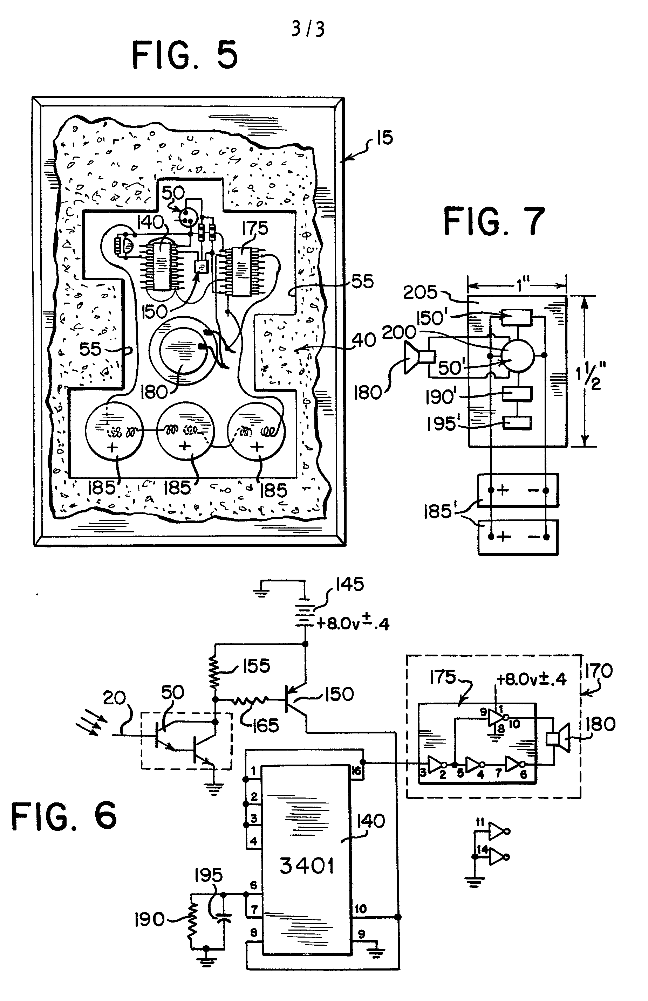

Referring now to FIG. 6 there is shown a circuit diagram of the audio portion of the audio-visual message bearing device of FIG. 1. The integrated circuit digital memory and logic described in connection with FIG. 4 is shown packaged in a conventional dual-in-line package 140 having input and output pins 1-10 and 16. A battery 145 provides a source of electrical energy through transistor switch 150 to terminals 8 and 10 of I.C. 140. The battery is also connected through a resistor 155 to photosensitive transistor switch 50 and through a resistor 165 to the base of transistor switch 150. Also shown is audio output circuit 170 which is a conventional integrated circuit push pull amplifier 175 the input to which is the output of I.C. 140 and the output of which drives ceramic acoustic transducer 180.

As can be seen by reference to FIG. 5 the circuitry and components shown in FIG. 4 are placed in the cut out area 55 of the styrofoam back portion 40 of card 15. It is noted that battery 145 consists of three nominally 2.8 volt batteries 185 connected in series.

In operation the card 15 is manipulated in a predetermined manner, in this instance the front leaf 35 is opened exposing lens 20 of photo transistor 50 to ambient light. The light causes transistor 50 to conduct which in turn causes transistor 150 to conduct thereby applying current to I.C. 140 the digital logic of which generates the controlled energy content rectangular waves that drive audio output circuit 170 and the Christmas carols stored in the digital memory of I.C. 140 are played in clear bell tones. The result is a unique, inexpensive, expendable and portable audio visual message device.

An alternative embodiment of the audio generating portion of the device is shown in FIG. 7. In this embodiment the photo transistor of FIG. 6 has been included in the integrated circuit of FIG. 4. In addition, the integrated circuit also embodies push-pull amplifier 175. This expanded function integrated circuit 200 is mounted on flexible printed circuit strip 205. Also mounted on this strip are hybrid component versions of transistor 150 now 150' and capacitor and resistor 190, 195 now 190' and 195' respectively. The entire circuit of FIG. 6 has thus been reduced to a flexicircuit on the order of 1" x 1-1/2" which is only 1-2 mm. thick. This much thinner embodiment is combined with "paper" batteries 185' of the type manufactured by Matsushita Electric to provide an audio generating portion of the audio visual message bearing device which is on the same order of thickness as the leaf of a greeting card.

The digital memory of this embodiment has been modified to include from 3-5 different musical messages. When the integrated circuit chip is manufactured the digital address logic is modified so that one of the messages is chosen to be played. Thus a Christmas, birthday, New Years or other appropriate message may be selected without any other change in the circuitry.

CLAIMS:

1. A portable audio-visual message device comprising:

a) digital storage means for storing values of pitch and duration for selected sounds;

b) digital logic means for accessing said digital storage means and for producing from said stored values a series of rectangular waves;

c) output means including acoustic transducer means, connected to said digital logic means, for producing audible sounds from said series of rectangular waves;

d) means for supplying electrical energy;

e) switch means for connecting said electrical energy to said digital logic means and said output means, whereby a predetermined manipulation of said device actuates said switch means and audible sound is produced.

2. A device according to Claim 1 wherein said digital storage means and said digital logic means comprise a single integrated circuit.

3. A device according to Claim 2 wherein said single integrated circuit includes said switch means and is mounted on a flexible printed circuit strip.

4. A musical greeting card comprising:

a) digital storage means for storing values of pitch and duration for a plurality of musical tones;

b) digital logic means for accessing said digital storage means and producing from the said stored values a series of rectangular waves, each wave of said series having a predetermined energy content;

c) output means, including acoustic transducer means, connected to said digital logic means for producing musical tones from said series of rectangular waves;

d)    means for supplying electrical energy;

e)    switch means for connecting said electrical energy to said digital logic means and said output means whereby a predetermined manipulation of the greeting card actuates said switch means and a series of musical tones is produced.

5.    A greeting card according to Claim 3 wherein said musical tones are arranged in accordance with one or more musical compositions.

6.    A greeting card in accordance with Claim 3 wherein said digital storage means and said digital logic means comprise a single integrated circuit.

7.    A greeting card according to Claim 5 wherein said switch means is a light actuated transistor switch.

8.    A greeting card according to Claim 5 wherein said acoustic transducer is a flat ceramic speaker.

# FIG. 1

# FIG. 3

# FIG. 2

FIG. 4

2/3

# FIG. 5

# FIG. 7

# FIG. 6

## DOCUMENTS CONSIDERED TO BE RELEVANT

| Category | Citation of document with indication, where appropriate, of relevant passages | Relevant to claim |
|---|---|---|
| | GB – A – 1 541 850 (ROBIN DAVID PALMER)<br>* Whole document * | 1, 4, 5 |
| | FR – A – 2 373 844 (BOLUS)<br>* Whole document * | 1, 4, 5 |
| | GB – A – 2 026 223 (KABUSHIKI KAISHA SUWA SEIKOSHA)<br>* Whole document * | 1, 4, 5 |
| | ELECTRONICS INTERNATIONAL, vol. 53, January 3, 1980<br>NEW YORK (US)<br>"Watch chips sings four tunes"<br>pages 196 and 198<br>* Whole article * | 1, 4, 5 |
| A | US – A – 4 102 067 (TARRANT)<br>* Whole document * | 1, 4 |
| A | US – A – 3 462 157 (BARNETT)<br>* Whole document * | 1, 4 |

**CLASSIFICATION OF THE APPLICATION (Int. Cl.)**

B 3 D 15/02
G H 1/20

**TECHNICAL FIELDS SEARCHED (Int. Cl.)**

B 42 D
G 10 H
G 09 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-05-1981 | MELLEMANS |